# EUROPEAN PATENT APPLICATION

(11) **EP 4 803 699 A1**
(43) Date of publication of application: **09.09.2026**
(21) Application number: 26162470.4
(22) Date of filing: 05.03.2026
(51) Int. Cl.: E01H 1/14, B60R 19/00

(54) **SELF-CLEANING HANGING MAGNETIC SWEEPING APPARATUS**

(30) Priority: 05.03.2025 US 202563767129 P
(71) Applicant: Bluestreak Equipment Inc., Delhi Ontario N4B 2W6 (CA)
(72) Inventor: WEBER, Brian, Delhi Ontario N4B 2W6 (CA); TOWNSEND, Emmett, Delhi Ontario N4B 2W6 (CA)
(74) Representative: You Patent

(57) **Abstract**

A self-cleaning hanging magnetic sweeping apparatus for protecting pneumatic tires on mechanical cleaning equipment such as street sweepers. The magnetic sweeper apparatus is suspended beneath or behind a front bumper of a street sweeper. A pair of cross-belt self-cleaning magnets are positioned in front of steer tires of the street sweeper. Each cross-belt magnet includes a rare-earth magnet within a housing, a conveyor belt and pulley system, and a motor for clean-off operations. During a clean-off cycle, the conveyor belt carries collected ferrous debris out of the magnetic field and deposits the debris at a location for collection by the sweeper's main cleaning head. A central bracket system suspends the magnets, provides width adjustability for different track widths, and raises or lowers the magnets to set a desired sweeping height, optionally using limit switches.

## Description

### Cross-Reference to Related Applications

This application claims the benefit of U.S. Provisional Patent Application No. 63/767,129, filed March 5, 2025, titled "SELF-CLEANING HANGING MAGNETIC SWEEPING APPARATUS", which is herein incorporated by reference in its entirety.

### Background

This disclosure addresses protecting pneumatic tires on mechanical cleaning equipment, including but not limited to mechanical, vacuum and, regenerative air street sweepers.

Road maintenance crews frequently employ street sweepers to clean up debris commonly found on road shoulders, laneways and other city streets. In most cases, the main collection head of a street sweeper is located between the wheelbase of the vehicle, and in some cases even at the rear of the vehicle. While this is beneficial for cleaning operations, this leaves the leading steer tires exposed to debris in the travel path. A common complaint from industry professionals is regarding tire punctures from nails, and other metal debris as the street sweeper performs its cleaning operations. This leads to vehicle downtime for repairs.

Additionally, this disclosure addresses the Gross Vehicle Weight Rating (GVWR) constraint that some street sweepers have. GVWR is a measure of the maximum weight a vehicle can carry safely. Conventional magnet bars are overly heavy and can often push a street sweeper over its GVWR after the street sweeper has performed its cleaning operations.

Accordingly, there is a need for improved tire protection and a lightweight alternative to traditional magnetic sweeping accessories.

### Summary

A self-cleaning hanging magnetic sweeping apparatus for protecting pneumatic tires on mechanical cleaning equipment such as street sweepers. The apparatus is suspended beneath or behind a front bumper region and positions one or more magnetic sweeping modules in front of the steer tires (or along a desired portion of track width). In a preferred implementation, a pair of cross-belt self-cleaning magnet modules are positioned ahead of the steer tires. Each module includes a rare-earth magnet within a housing, a conveyor belt and pulley system, and a motor for clean-off operations. During a clean-off cycle, the belt carries collected ferrous debris out of the magnetic field and deposits the debris on the ground at a location selected to be collected by the main cleaning head of the street sweeper. In some embodiments, a central bracket system suspends the modules, provides width adjustability to accommodate varying tire track widths, and raises/lowers the modules (e.g., in unison) to achieve a desired sweep height, optionally using limit switches for repeatable height settings.

### Brief Description of the Drawings

FIG. 1 is a perspective view of an exemplary self-cleaning hanging magnetic sweeping apparatus mounted at a front region of a vehicle, showing cosmetic covers installed over internal mechanical components.
FIG. 2 is a perspective view of the apparatus of FIG. 1 with cosmetic covers removed to reveal a central hanging bracket system and two cross-belt magnet modules.
FIG. 3 is a side view of the apparatus in a sweeping position, in which the magnet modules are lowered toward an operational sweep height above the ground surface.
FIG. 4 is a side view of the apparatus in a travel position in which the magnet modules are raised up off the ground to increase clearance during transport or non-sweeping operations.
FIG. 5 is a front view of the apparatus in the sweeping position, illustrating the lateral positioning of the left and right magnet modules relative to the vehicle's steer-tire track width.
FIG. 6 is a front plan view showing the apparatus mounted on the front of a vehicle, illustrating placement of the modules forward of the steer tires.
FIG. 7 is a perspective view showing the apparatus mounted on the front of the vehicle, illustrating the overall packaging under / behind the bumper region.
FIG. 8 is a side view of the apparatus mounted on the front of the vehicle, illustrating the relationship of the apparatus to the vehicle front bumper and ground clearance.
FIG. 9 is a perspective view of a single cross-belt magnet module, showing a rare-earth magnet in a steel/stainless housing, a conveyor belt and pulley system, a 12V DC motor for clean-off, and UHMWPE nylon ropes for suspension.
FIG. 10 is an overview diagram showing the apparatus relative to street sweeper components, including belt direction, debris dropping area, magnet width, vehicle track width, and the location of a typical main cleaning head.
FIG. 11 is a diagram illustrating an optimal sweep height (about 2-3 inches) for collection performance, and further illustrating a central hanging bracket system that can raise/lower the modules in unison and provide width adjustability for different sweepers.
FIG. 12 is a close-up view of the single cross-belt magnet module.

### Detailed Description

Street sweepers commonly position their main cleaning head between the wheelbase (and sometimes rearward), leaving the leading steer tires exposed to nails and other metallic debris in the travel path. The disclosed apparatus provides forward-of-tire magnetic pickup to reduce punctures and downtime, and does so with a lighter-weight approach intended to mitigate GVWR issues associated with conventional heavy magnet bars.

The present disclosure relates to magnetic sweeping apparatuses mountable to mobile mechanical cleaning equipment, including mechanical, vacuum, and regenerative-air street sweepers. In exemplary embodiments, the apparatus is suspended beneath or behind a front bumper region such that magnetic sweeping modules are positioned forward of steer tires, thereby reducing the likelihood that the tires encounter ferrous debris such as nails during a cleaning route.

### Example reference numerals

For clarity in a nonprovisional specification, the following reference numerals may be used in the drawings (these do not limit the claims):
- 100: magnetic sweeping apparatus
- 102: Cosmetic Covers
- 110: central hanging bracket assembly
- 112: bumper / vehicle mounting interface
- 114: bracket width adjustment structure (track-width adjustment 1)
- 115: magnet width adjustment structure (track-width adjustment 2)
- 116: lifting mechanism (e.g., actuator / winch / linear actuator)
- 118: height control (e.g., limit switches and / or controller)
- 120, 130: left and right cross-belt magnet modules
- 122: module housing (steel / stainless / aluminum components)
- 124: rare-earth magnet assembly
- 126: conveyor belt (with optional cleats)
- 127: belt direction (clean-off direction)
- 128: pulley / roller assembly
- 129: motor (e.g., 12V DC)
- 131: cleats
- 132: suspension members (e.g., ropes / straps)
- 134: cosmetic cover(s)
- 200: street sweeper vehicle
- 210: steer tires
- 220: main cleaning head
- 230: debris drop zone
- 240: direction of belt
- 250 centerline of vehicle

### System Overview

In an exemplary embodiment, a self-cleaning hanging magnetic sweeping apparatus is mounted beneath or behind a front bumper region of a street sweeper (or other mechanical cleaning equipment). A pair of cross-belt self-cleaning magnet modules are positioned **in front of the steer tires** so that ferrous debris is collected before the tires roll over it.

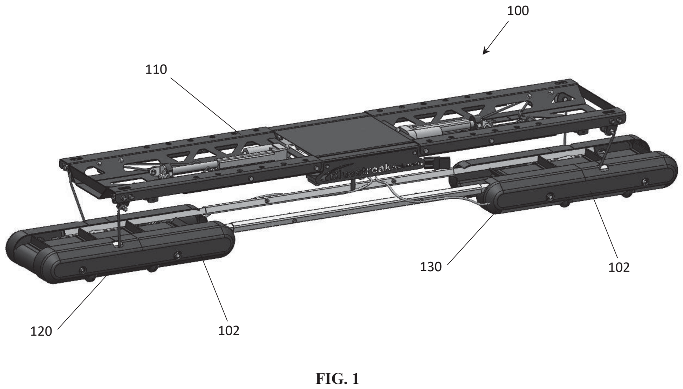

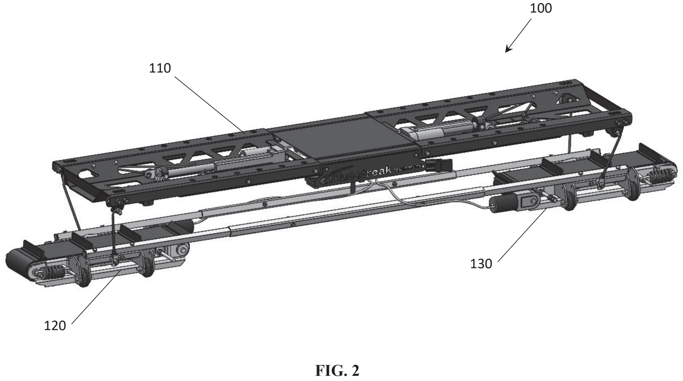

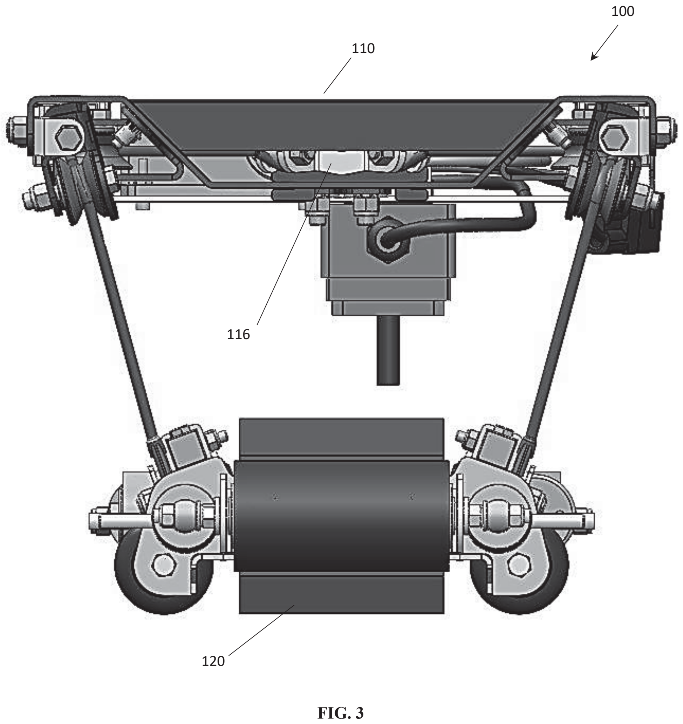

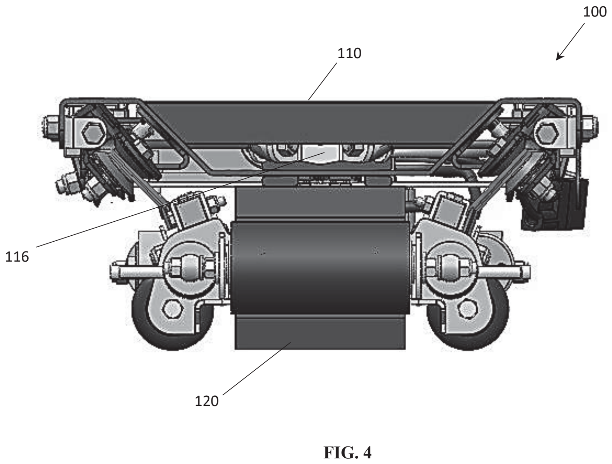

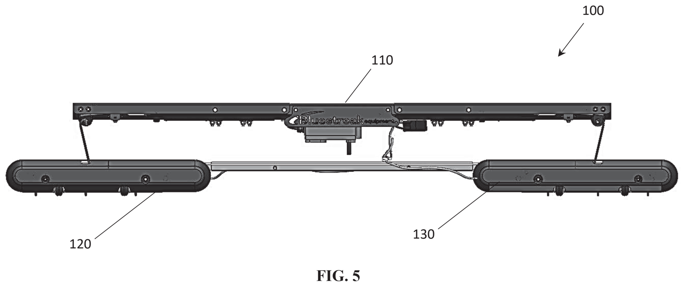

As shown in FIGS. 1-8, the apparatus may include cosmetic covers (FIG. 1) and/or exposed structural and functional components (FIG. 2). The apparatus is configured to operate in at least two positions: a lowered sweeping position (FIG. 3 and FIG. 5) and a raised travel position (FIG. 4).

FIG. 1 is a perspective view of the apparatus 100, showing cosmetic cover(s) 102 installed over components of the central hanging bracket system 110 and cross-belt magnet modules 120, 130.

FIG. 2 is a perspective view of the apparatus 100 of FIG. 1 with cosmetic cover(s) 102 removed to reveal the central hanging bracket system 110, bracket width adjustment assembly 114, magnet width adjustment assembly 115, lift assembly 116, height control elements 118, and the pair of cross-belt magnet modules 120, 130.

FIG. 3 is a side view of the apparatus 100 in a sweeping position, in which the magnet modules 120, 130 are lowered toward an operational sweep height above the ground surface.

FIG. 4 is a side view of the apparatus 100 in a travel position, in which the magnet modules 120, 130 are raised up off the ground to increase clearance during transport or non-sweeping operations.

FIG. 5 is a side view of the apparatus 100 in a sweeping position, in which the magnet modules 120, 130 are lowered towards the ground to decrease clearance during sweeping operations.

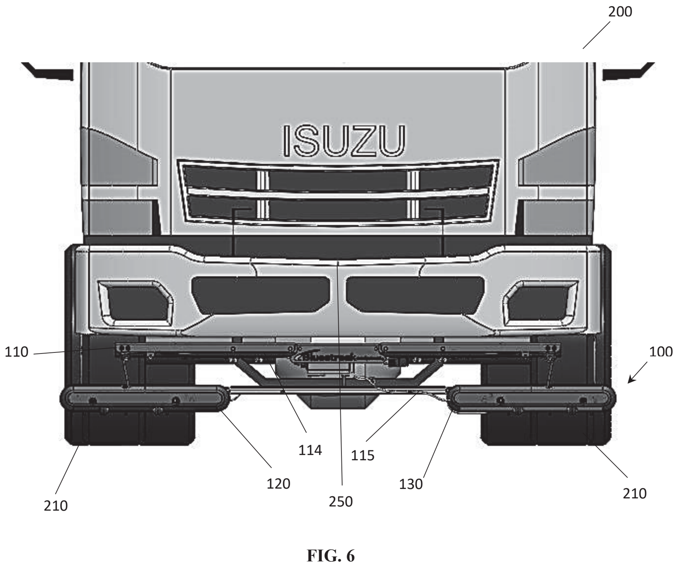

FIG. 6 is a front view of the apparatus 100 in the travelling position showing the lateral positioning of magnet modules 120, 130 relative to the steer tires 210 and track width (with vehicle centerline 250).

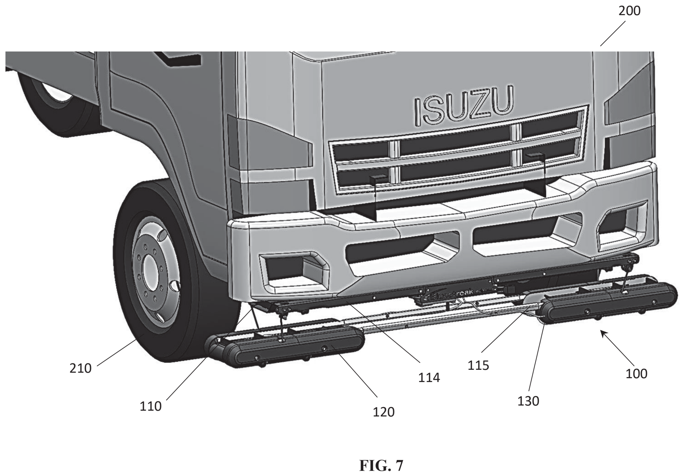

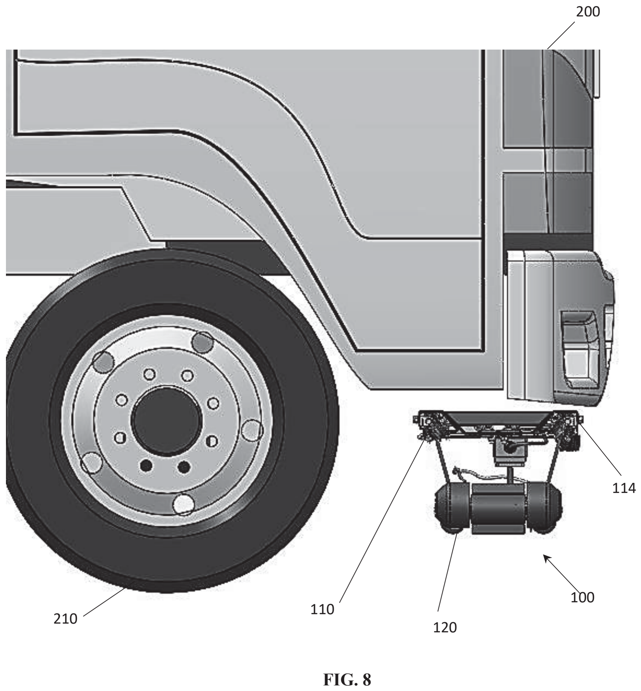

FIG. 7 is a diagram of a perspective view of the apparatus 100 on the front of a vehicle.. FIG. 8 is a diagram of a side view of the apparatus on the front of a vehicle.

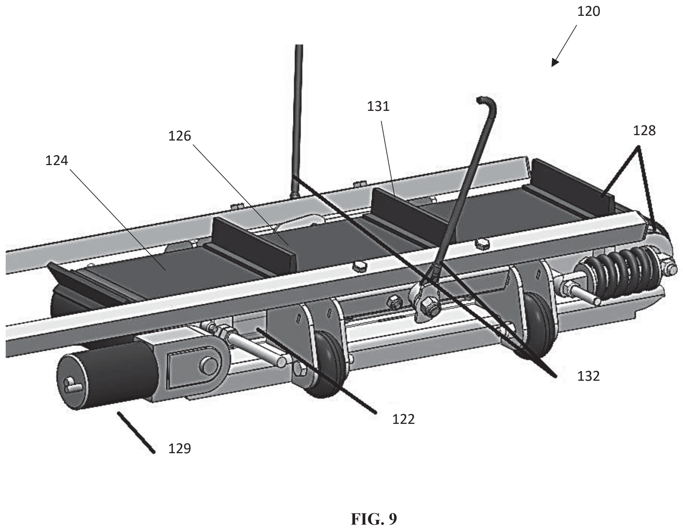

FIG. 9 is a perspective view showing the module (120) with covers removed. Illustrating conveyor belt (126), cleats (131), motor (129), module housing (122), pully / roller assembly 128 and suspension members (132)

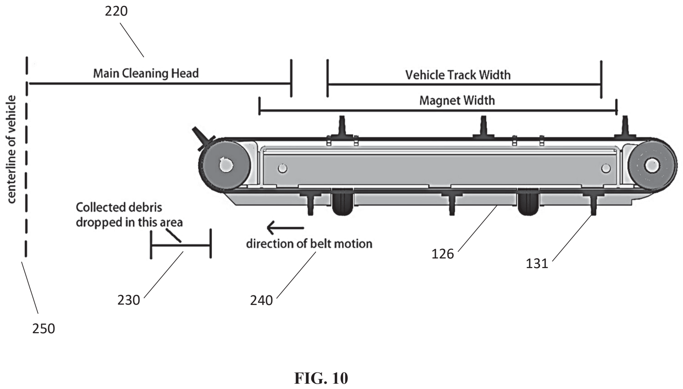

FIG. 10 is an overview of the magnet and street sweeper components illustrating centerline of vehicle (25), main cleaning head width (220), direction of belt motion (240), collected debris dropped area (230)

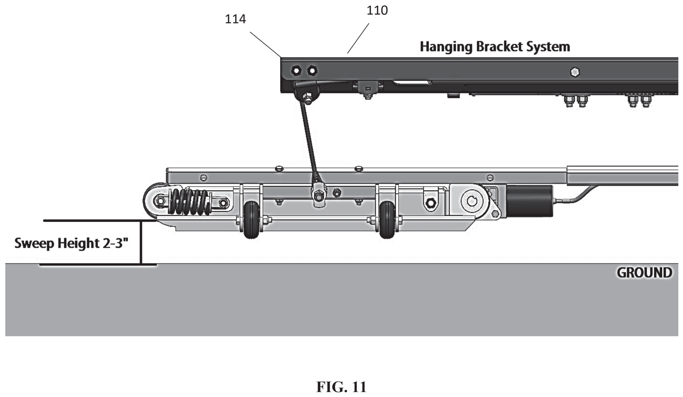

FIG. 11 is a front view showing the optimal sweep height of 2-3" measured from the bottom of the belt.

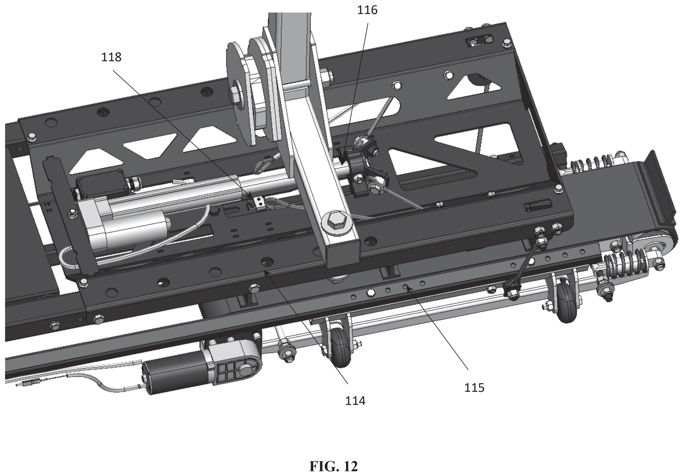

FIG. 12 is a close-up view of the single cross-belt magnet module.

### Suspended Mounting and Positioning

As illustrated in FIGURES 6 - 8, apparatus 100 mounts to a vehicle 200, preferably proximate a front bumper region, so that modules 120 and 130 reside ahead of steer tires 210 along the tire track width. In some embodiments, bracket assembly 110 includes a bracket width adjustment structure 114 enabling the modules to be shifted laterally to align with a particular sweeper's track width. There is another magnet width adjustment structure 115 to further extend the width of the apparatus to fit wider vehicle. This adjustability accommodates variance in pneumatic tire widths and overall vehicle widths.

According to the disclosure, modules 120, 130 may be suspended from the bracket system 110 via suspension members 132 (e.g., UHMWPE nylon ropes). In optional embodiments, the suspension members provide compliance to accommodate uneven terrain and reduce shock loading. Alternative suspension members include straps, chains, elastomeric links, or pivoting hangers, provided they support the operational sweep height and maintain the intended module orientation.

### Central Hanging Bracket System

In one embodiment, the central hanging bracket system 110 couples to the vehicle via mounting interface 112, which may include one or more brackets, plates, or structural members configured to attach to factory bumper mounting points, tow-hook points, frame extensions, or other rigid structures. The mounting interface 112 may include vibration-isolating bushings and/or fasteners sized for expected dynamic loads encountered during sweeping operations.

Bracket width adjustment assembly 114 (track-width adjuster 1). The bracket system 110 includes width adjustability so the apparatus can be optimally set up for different street sweepers, addressing variance in pneumatic tire widths and overall vehicle widths/tire track widths.

Magnet width adjustment assembly 115 (track-width adjuster 2). The magnet assemblies are mounted on support rods with set of holes to adjust lateral position of the magnets. This will help to further extend the width of the apparatus to fit wider vehicles/sweepers.

Example (non-limiting) implementations for width adjustment include:
- a telescoping crossbar (square/rectangular tubes) with a clamp collar or pinch bolts;
- slotted plates with bolt patterns allowing discrete lateral positions;
- a rack-and-pinion or lead-screw adjuster for fine lateral positioning; and/or
- removable spacer blocks or pinned holes for repeatable setups across a fleet.

In any such implementation, once lateral spacing is set, the modules 120, 130 are secured to resist lateral drift during operation, while still allowing later reconfiguration for a different vehicle track width.

### Lift Assembly and Sweep-height Control (limit switches)

According to the disclosure, the bracket system 110 can raise and lower the cross-belt magnets in unison when required by the operator, including between a lowered sweeping position (FIG. 3) and a raised travel position (FIG. 4).

According to the disclosure, the lift assembly 116 may be implemented as any mechanism capable of moving modules 120, 130 between positions, including:
- one or more linear actuators (electric or hydraulic) connected to a linkage, pivot arm, or sliding carriage;
- a winch and cable arrangement routed over pulleys/sheaves to lift the modules;
- a rotating crank arm driven by a motor/gearbox; or
- a cylinder (pneumatic/hydraulic) coupled to the bracket system.

The lift mechanism 116 may lift both modules 120, 130 in unison (e.g., by a common cross member or synchronized actuators), or may provide independent lift control per module where desired.

According to the disclosure, height control elements 118 (i.e., limit switches / stops) may be used. Adjustable sweep heights are supported via sets of limit switches 118 (and/or mechanical stops) to provide repeatable positioning and to reduce operator variability.

In one example, one limit switch establishes a repeatable lowered sweep height and another establishes a raised travel height. In other examples, multiple switches or a selectable switch bank provides multiple discrete sweep heights (e.g., "low / medium / high"), optionally via a controller that stops the lift motor/actuator when a selected switch is triggered.

FIG. 11 is a diagram illustrating an example sweep height H (about 2-3 inches) and showing that the central hanging bracket system 110 can raise / lower modules 120, 130 in unison via lift assembly 116, and can provide width adjustability via assembly 114 to optimize setup for different street sweepers. According to FIG. 11, an optimal sweep height H of approximately 2-3 inches for collection performance in at least some configurations. The apparatus 100 may therefore be configured such that the sweep-height setpoint corresponds to this range (or is adjustable about this range) depending on roadway conditions, vehicle suspension, and magnet module geometry.

### Cross-belt Self-cleaning Magnet Module

FIG. 9 is a perspective view of a single cross-belt magnet module, showing a rare-earth magnet in a steel/stainless housing, a conveyor belt and pulley system, a 12V DC motor for clean-off, and UHMWPE nylon ropes for suspension. FIG. 9 illustrates an example cross-belt magnet module (e.g., module 120 and / or module 130). In preferred embodiments, the module includes a rare-earth magnet assembly 124 housed within a steel and / or stainless-steel housing 122, a conveyor belt 126 with cleats 131 and pulley system 128, and a motor 129 for clean-off operations, such as a 12V DC motor. In some embodiments, the module is suspended via a pair of suspension members such as UHMWPE nylon ropes (e.g., 132).

In some embodiments, the rare-earth magnets may be of a grade such as N42, which provides greater pickup performance than typical ceramic bar magnets and helps reduce the chance of collected debris falling off the magnet during operation.

### Clean-off Operation and Debris Handoff

FIG. 10 is a diagram providing an overview of the magnet and street sweeper components. According to FIG. 10, the directional overview includes belt direction, debris dropping area, magnet width relative to track width, and the cleaning head location.

According to FIG. 10, one feature is self-cleaning whereby an operator can push a button 119 (not shown) to have the magnets clean themselves off. During a clean-off cycle, debris is pushed perpendicular to the direction of travel 240 toward the vehicle centerline 250 via the conveyor belt 126. Cleats 131 physically carry debris out of the magnetic field and the debris is deposited onto the ground in a debris drop zone 230, directly in front of the main cleaning head 220 so that, as the vehicle continues moving, the main cleaning head collects the redeposited debris. In alternative modes, the belts may remain stationary to retain debris during operation for later disposal. The belt direction may also be reversed if desired.

### Sizing and Placement Logic

A further key aspect is sizing and placement whereby the magnet modules are sized and positioned to protect the pneumatic tire track width and to ensure the cleaning head fully collects redeposited debris. The clean-off procedure should be performed while moving so that debris is easily picked up by the main cleaning head during forward motion. In practice, this supports configuring lateral placement and belt discharge direction so the drop zone lies within a capture region of the main cleaning head.

### Sweep Height and Travel Position

FIG. 3 is a diagram illustrating a side view of the apparatus in a sweeping position. FIG. 4 is a diagram illustrating a side view of the apparatus in a travel position raised up off the ground. FIG. 5 is a diagram illustrating a front view of the apparatus in a sweeping position. According to embodiments from FIGURES 3 - 5, bracket assembly 110 includes a lifting mechanism 116 to raise and lower the magnet modules, optionally in unison, between a sweeping position (FIGS. 3 and 5) and a travel position raised off the ground (FIG. 4). In some implementations, a sweep height in a range of about 2 - 3 inches can be used to improve collection of metallic debris, and height may be controlled via limit switches 118 for repeatable positioning.

### Operating Modes and Reversibility

In addition to self-cleaning operation, belt 126 may be left stationary so debris is collected and retained on the magnet during sweeper operation for later disposal. The belt direction 127 may also be reversed if desired (e.g., to change discharge direction or to assist with clearing jams).

### Weight and GVWR considerations

In certain embodiments, the apparatus uses a cross-belt separator architecture with rare-earth magnets to provide a lighter-weight alternative to traditional hanging bar magnets, assisting with GVWR constraints. Some components such as housings, flanges, and covers may be formed of aluminum or other lightweight materials as appropriate.

### Alternative Embodiments

In some embodiments, a magnet assembly may be mounted across substantially an entire vehicle track width (as a single module or multiple modules), with or without self-cleaning, and may clean off into an on-board storage container. Alternative embodiments include a magnet skirt for a single wheel or other magnetic shrouds configured to protect pneumatic tires.

### Construction and variations

Unless otherwise stated, components may be implemented with mechanical, electrical, and electro-mechanical systems. The steps of methods described herein may be performed in various orders unless a specific order is required. Various modifications, combinations, and equivalents are within the scope of the claims.

A magnetic sweeping apparatus for a mobile mechanical cleaning vehicle having steer tires and a cleaning head. The apparatus comprises a mounting structure configured to couple to the vehicle proximate a front bumper region, a first magnetic sweeping module and a second magnetic sweeping module supported by the mounting structure and positioned, when installed on the vehicle, forward of respective ones of the steer tires and a clean-off drive configured, in a clean-off mode, to drive the conveyor belt to transport ferrous debris collected by the rare-earth magnet assembly out of a magnetic field of the rare-earth magnet assembly and to discharge the ferrous debris to a discharge zone positioned to be collected by the cleaning head during forward motion of the vehicle.

According to the disclosure, each magnetic sweeping module comprises a rare-earth magnet assembly disposed within a housing and a conveyor belt movable relative to the rare-earth magnet assembly. The discharge zone is located forward of the cleaning head and laterally inward of the respective steer tires.

According to the disclosure, the conveyor belt, in the clean-off mode, transports the ferrous debris generally perpendicular to a direction of travel of the vehicle. The conveyor belt includes cleats configured to mechanically carry the ferrous debris out of the magnetic field prior to discharge.

According to the disclosure, the clean-off drive comprises an electric motor coupled to a pulley system of the conveyor belt. The electric motor is a 12V DC motor.

According to the disclosure, the apparatus further comprises a suspension members supporting at least one of the first magnetic sweeping module or the second magnetic sweeping module, wherein the suspension members comprise UHMWPE rope. The mounting structure comprises a width-adjustable bracket configured to vary lateral spacing of the first magnetic sweeping module and the second magnetic sweeping module to match a vehicle tire track width.

According to the disclosure, the apparatus further comprises a lifting mechanism configured to raise and lower the first magnetic sweeping module and the second magnetic sweeping module between a sweeping position and a travel position. The lifting mechanism is configured to raise and lower the first magnetic sweeping module and the second magnetic sweeping module in unison.

According to the disclosure, the apparatus further comprises a height control system including at least one limit switch configured to establish a repeatable sweeping height. The repeatable sweeping height is within a range of about 2 inches to about 3 inches above a ground surface.

According to the disclosure, the housing comprises steel or stainless steel surrounding the rare-earth magnet assembly. The apparatus further comprises an operator control configured to initiate the clean-off mode while the vehicle is moving.

According to the disclosure, each magnetic sweeping module of the apparatus is configured to operate with the conveyor belt stationary during a debris collection mode such that the rare-earth magnet assembly retains collected ferrous debris on the module. The clean-off drive of the apparatus is further configured to reverse a belt direction to change the discharge direction of debris.

A self-cleaning magnetic sweeping module for a vehicle comprising a housing, a rare-earth magnet assembly disposed in the housing, a conveyor belt routed about a plurality of rollers such that a belt portion traverses a debris collection region adjacent the rare-earth magnet assembly and a motor configured to drive the conveyor belt to carry ferrous debris from the debris collection region to a discharge region where the ferrous debris is removed from the magnetic field and released.

According to the disclosure, the housing comprises steel or stainless steel and the module further comprises one or more aluminum covers. The module further comprises suspension members configured to suspend the module from a bracket mounted to the vehicle.

According to the disclosure, the motor is configured for powered clean-off on command from an operator. The conveyor belt includes cleats. The rare-earth magnet assembly comprises magnets of at least N42 grade.

A method of protecting pneumatic tires of a street sweeper from ferrous road debris. The method comprising the steps of suspending one or more magnetic sweeping modules from a front region of the street sweeper such that the one or more magnetic sweeping modules are positioned forward of steer tires, collecting ferrous debris on a rare-earth magnet assembly of the one or more magnetic sweeping modules while the street sweeper travels forward an during a clean-off cycle, driving a conveyor belt of the one or more magnetic sweeping modules to transport the ferrous debris out of a magnetic field of the rare-earth magnet assembly and depositing the ferrous debris at a location configured to be collected by a main cleaning head of the street sweeper.

According to the disclosure, the depositing of the method comprises moving the ferrous debris laterally toward a centerline of the street sweeper. The method further comprises adjusting at least one of (i) a lateral spacing of two magnetic sweeping modules to match a tire track width, or (ii) a sweeping height using a limit-switch-defined position.

While some embodiments or aspects of the present disclosure may be implemented in fully functioning mechanical, electrical and electrical-mechanical systems, other embodiments may be considered.

The methods disclosed herein comprise one or more steps or actions for achieving the described method. The method steps and / or actions may be interchanged with one another without departing from the scope of the claims. In other words, unless a specific order of steps or actions is required for proper operation of the method that is being described, the order and/or use of specific steps and/or actions may be modified without departing from the scope of the claims.

The specific embodiments described above have been shown by way of example and understood is that these embodiments may be susceptible to various modifications and alternative forms. Further understood is that the claims are not intended to be limited to the forms disclosed, but to cover all modifications, equivalents, and alternatives falling within the spirit and scope of this disclosure. While the foregoing written description of the system enables one of ordinary skill to make and use what is considered presently to be the best mode thereof, those of ordinary skill will understand and appreciate the existence of variations, combinations, and equivalents of the specific embodiment, method, and examples herein. The system should therefore not be limited by the above-described embodiment, method, and examples, but by all embodiments and methods within the scope and spirit of the system. Thus, the present disclosure is not intended to be limited to the implementations shown herein but is to be accorded the widest scope consistent with the principles and novel features disclosed herein.

Information as herein shown and described in detail is fully capable of attaining the above-described object of the present disclosure, the presently preferred embodiment of the present disclosure, and is, thus, representative of the subject matter which is broadly contemplated by the present disclosure. The scope of the present disclosure fully encompasses other embodiments which may become obvious to those skilled in the art, and is to be limited, accordingly, by nothing other than the appended claims, wherein any reference to an element being made in the singular is not intended to mean "one and only one" unless explicitly so stated, but rather "one or more." All structural and functional equivalents to the elements of the above-described preferred embodiment and additional embodiments as regarded by those of ordinary skill in the art are hereby expressly incorporated by reference and are intended to be encompassed by the present claims.

Moreover, no requirement exists for a system or method to address each problem sought to be resolved by the present disclosure, for such to be encompassed by the present claims. Furthermore, no element, component, or method step in the present disclosure is intended to be dedicated to the public regardless of whether the element, component, or method step is explicitly recited in the claims. However, various changes and modifications in form, material, workpiece, and fabrication material detail may be made, without departing from the spirit and scope of the present disclosure, as set forth in the appended claims, as may be apparent to those of ordinary skill in the art, are also encompassed by the present disclosure.

## Claims

1. A magnetic sweeping apparatus for a mobile mechanical cleaning vehicle (200) having steer tires (210) and a cleaning head (220), the apparatus comprising:
a mounting structure (110, 112) arranged to be coupled to the vehicle proximate a front bumper region;
a first magnetic sweeping module (120) and a second magnetic sweeping module (130) supported by the mounting structure and positioned, when installed on the vehicle, forward of respective ones of the steer tires (210);
wherein each magnetic sweeping module (120, 130) comprises a rare-earth magnet assembly (124) disposed within a housing (122) and a conveyor belt (126) movable relative to the rare-earth magnet assembly (124); and
a clean-off drive (129) arranged, in a clean-off mode, to drive the conveyor belt (126) to transport ferrous debris collected by the rare-earth magnet assembly (124) out of a magnetic field of the rare-earth magnet assembly and to discharge the ferrous debris to a discharge zone (230) positioned to be collected by the cleaning head (220) during forward motion of the vehicle.

2. The apparatus of claim 1, wherein the discharge zone (230) is located forward of the cleaning head (220) and laterally inward of the respective steer tires (210).

3. The apparatus of claim 1 or 2, wherein, in the clean-off mode, the conveyor belt (126) transports the ferrous debris generally perpendicular to a direction of travel (240) of the vehicle.

4. The apparatus of any one of claims 1 to 3, wherein the conveyor belt (126) comprises cleats (131) arranged to mechanically carry the ferrous debris out of the magnetic field prior to discharge.

5. The apparatus of any one of claims 1 to 4, wherein the clean-off drive comprises an electric motor (129) coupled to a pulley or roller assembly (128) of the conveyor belt (126).

6. The apparatus of claim 5, wherein the electric motor (129) is a 12 V DC motor.

7. The apparatus of any one of claims 1 to 6, comprising suspension members (132) supporting at least one of the first magnetic sweeping module (120) and the second magnetic sweeping module (130), wherein the suspension members (132) comprise UHMWPE rope.

8. The apparatus of any one of claims 1 to 7, wherein the mounting structure comprises a width-adjustable bracket (114) arranged to vary lateral spacing of the first magnetic sweeping module (120) and the second magnetic sweeping module (130) to match a vehicle tire track width.

9. The apparatus of any one of claims 1 to 8, comprising a lifting mechanism (116) arranged to raise and lower the first magnetic sweeping module (120) and the second magnetic sweeping module (130) between a lowered sweeping position and a raised travel position.

10. The apparatus of claim 9, wherein the lifting mechanism (116) is arranged to raise and lower the first magnetic sweeping module (120) and the second magnetic sweeping module (130) in unison.

11. The apparatus of claim 9 or 10, comprising a height control system (118) including at least one limit switch arranged to establish a repeatable sweeping height.

12. The apparatus of claim 11, wherein the repeatable sweeping height is within a range of 2 inches to 3 inches above a ground surface.

13. The apparatus of any one of claims 1 to 12, wherein each housing (122) comprises steel and/or stainless steel surrounding the rare-earth magnet assembly (124).

14. The apparatus of any one of claims 1 to 13, wherein each magnetic sweeping module (120, 130) is operable with the conveyor belt (126) stationary during a debris-collection mode such that the rare-earth magnet assembly (124) retains collected ferrous debris on the module.

15. A self-cleaning magnetic sweeping module (120, 130) for a vehicle, comprising:
a housing (122);
a rare-earth magnet assembly (124) disposed in the housing (122);
a conveyor belt (126) routed about a plurality of rollers (128) such that a belt portion traverses a debris collection region adjacent the rare-earth magnet assembly (124); and
a motor (129) arranged to drive the conveyor belt (126) to carry ferrous debris from the debris collection region to a discharge region where the ferrous debris is removed from the magnetic field and released.
